# EUROPÄISCHE PATENTSCHRIFT

(11) **EP 3 387 462 B1**
(45) Veröffentlichungstag und Bekanntmachung des Hinweises auf die Patenterteilung: **29.03.2023**
(21) Anmeldenummer: 16757576.0
(22) Anmeldetag: 09.08.2016
(51) Int. Cl.: G01S 13/931, B60K 35/00, B60K 37/00, B60R 19/48

(54) **KRAFTFAHRZEUG MIT IN EINER AUSSENWANDUNG EINGEBAUTEN SENSOREINRICHTUNG**
MOTOR VEHICLE HAVING A SENSOR DEVICE INSTALLED IN AN OUTER WALL
VÉHICULE AUTOMOBILE À DISPOSITIF DE DÉTECTION INCORPORÉ DANS UNE PAROI EXTÉRIEURE

(30) Priorität: 10.12.2015 DE 102015224924
(43) Veröffentlichungstag der Anmeldung: 17.10.2018
(73) Patentinhaber: Bayerische Motoren Werke Aktiengesellschaft, 80809 München (DE)
(72) Erfinder: ÖZTÜRK, Bünyamin, 80939 München (DE); MAIER, Dietmar, 84095 Furth (DE)
(86) Internationale Anmeldenummer: PCT/EP2016/068988
(87) Internationale Veröffentlichungsnummer: WO 2017/097445

(56) Entgegenhaltungen:
- EP-A1- 2 009 462
- EP-A2- 2 829 442
- DE-A1- 10 149 337
- DE-A1-102010 005 899
- DE-B- 1 222 395

## Beschreibung

Die Erfindung betrifft eine Außenwandung gemäß dem Oberbegriff des Patentanspruchs 1. Sie betrifft weiterhin ein Kraftfahrzeug mit einer eine Sensoreinrichtung aufweisenden Außenwandung.

Heutige Kraftfahrzeuge, insbesondere Personenkraftwagen, aber auch Nutzfahrzeuge, sind häufig mit in der Fahrzeugfront verbauten Sensoren versehen, die das Verkehrsgeschehen vor dem Kraftfahrzeug erfassen. Derzeit verbreitet ist bereits das Vorsehen von Radarsensoren zur Messung des Abstands zu einem vorausfahrenden Kraftfahrzeug. Weiterhin ist es bekannt, Radarsensoren im Fahrzeugheck vorzusehen, um sich von hinten annähernde Fahrzeuge zu erfassen. Aber auch das Vorsehen anderer Sensoren (zum Beispiel LIDAR) oder von Ultraschallsensoren im Bereich der Fahrzeugfront, des Fahrzeughecks oder an den Fahrzeugseiten ist bereits bekannt. Daher ist die vorliegende Erfindung nicht auf Radarsensoren beschränkt, sondern umfasst jegliche Art von Sensoren, die, insbesondere elektromagnetische, Signale aussenden und/oder empfangen.

Ein generelles Problem beim Vorsehen derartiger Sensoren in der Außenwandung eines Kraftfahrzeugs, insbesondere in der Fahrzeugfront, stellt die Verschmutzung, insbesondere im Winter durch Schnee oder Schneematsch, dar. Derartige Verschmutzungen des Sensors oder einer den Sensor gegen Fremdkörper und Verschmutzungen abschirmenden Schutzplatte setzen die Funktionsfähigkeit des Sensors, Signale in ausreichender Stärke auszusenden und zu empfangen, deutlich herab.

Um beispielsweise ein Zufrieren einer solchen Schutzplatte zu verhindern, ist es bekannt, derartige Schutzplatten zu beheizen. Auch ist es bekannt, wasserabweisende Materialien als Schutzplatte oder zur Beschichtung der Schutzplatte zu verwenden.

Bei fest in die Frontabdeckung eines Kraftfahrzeugs integrierter Schutzplatte mit dahinter angeordnetem Sensor ist der Abstand zwischen dem Sensor und der Schutzplatte üblicherweise groß, wobei es durch Luftströmungen und Verwirbelungen auch zu Schneeablagerungen im Bereich zwischen der Schutzplatte und dem Sensor kommen kann.

Je größer der Abstand zwischen dem Sensor und der Schutzplatte ist, umso größer müssen auch die Abmessungen der Schutzplatte sein, da diese das Sichtfeld des Sensors abdecken muss. Das wiederum bedeutet, dass zur Beheizung der Schutzplatte eine großflächige Heizung mit hoher Heizleistung erforderlich ist. Hinzu kommt, dass dann, wenn die Schutzplatte integraler Bestandteil eines Kühlergrills ist, durch die große Fläche der Schutzplatte viel Kühlluft verblockt wird, wodurch nicht nur der Strömungswiderstand des Kraftfahrzeugs erhöht wird, sondern auch die Kühlleistung der hinter dem Kühlergrill gelegenen Kühlvorrichtungen herabgesetzt ist. Ein weiterer Nachteil besteht darin, dass bei einer in den Kühlergrill integrierten Schutzplatte die Verkabelung für die Heizung der Schutzplatte im Kühlergrill vorgesehen und aufwändig verlegt werden muss, wodurch das Fahrzeuggewicht und die Montagezeit für den Kühlergrill ansteigen.

Aus der DE 101 49 337 A1 ist eine Vorrichtung für ein Frontabdeckteil eines Kraftfahrzeugs bekannt, die Niederschlagsablagerungen in fester oder flüssiger Form in einem Bereich der Oberfläche des Frontabdeckteils beseitigt und/oder verhindert, wobei wenigstens ein Teil des Frontabdeckteils von elektromagnetischen Wellen eines Radarsensors zur adaptiven Fahrgeschwindigkeitsregelung durchdrungen wird. Diese bekannte Vorrichtung wirkt direkt auf das Frontabdeckteil ein, um eine Störung des Radarsensors durch ein verschmutztes Frontabdeckteil zu verringern.

Ferner ist aus der DE102010005899A1 ein Radom bekannt, also eine Abdeckung für ein Abstandswarnradar. Radom und Abstandswarnsensor sind innerhalb einer seitlichen Umhüllung, einem so genannten Emblemtopf, angeordnet. Der Emblemtopf dient als Gehäuse des Radoms. Das Radom ist als sternförmiges Emblem mit einer ersten und einer zweiten Form ausgebildet. Die beiden Formen sind durch Verbindungswände zu einem dreidimensionalen Emblem verbunden. Die beiden Formen sind dabei so gestaltet, dass sie mit der Ausdehnung der vom Abstandswarnradar gebildeten Radarkeule korrespondieren. Die beiden Formen bestehen aus einem radartransparenten Material mit einer sehr dünnen Schicht mit Indium oder einem ähnlichen Metall. Durch diesen Aufbau, in Verbindung mit einer spiegelbildlichen Gestaltung der beiden Formen, wird eine Optimierung hinsichtlich des Durchtritts der Radarstrahlen erreicht. Durch die Gestaltung des Radoms, insbesondere des vorderen Bereich des Radoms, in welchem die erste Form angeordnet ist, als eine nicht geschlossene Fläche, wird eine Ansammlung von Schmutz und Feuchtigkeit und insbesondere eine Vereisung des Radoms und eine daraus resultierende Beeinträchtigung einer Funktionstüchtigkeit des Abstandswarnradars verhindert. Mit anderen Worten dienen die Zwischenräume zwischen den einzelnen "Fingern" des Emblems, innerhalb des Emblemtopfes, als Freiräume für die Durchströmung mit Fahrtwind. Optional ist zwischen Emblem und Abstandswarnradar eine Radomplatte angeordnet. Diese Radomplatte verbessert den Schutz des Abstandswarnradars vor Steinschlag. Gleichzeitig behindert die Radomplatte jedoch die Durchströmung des Emblemtopfes mit Fahrtwind.

Aufgabe der vorliegenden Erfindung ist es, eine gattungsgemäße Außenwandung anzugeben, die die Nachteile des Standes der Technik beseitigt und die insbesondere die Verblockung der Kühlluftströmung reduziert und bei der die Gefahr der Verschmutzung, insbesondere durch Schnee oder Schneematsch, weiter herabgesetzt ist. Des Weiteren ist es eine Aufgabe der vorliegenden Erfindung, ein Kraftfahrzeug mit einer solchen Außenwandung, insbesondere Frontabdeckung, anzugeben.

Der auf die Außenwandung gerichtete Teil der Aufgabe wird gelöst durch eine Außenwandung mit den Merkmalen des Patentanspruchs 1.

Die erfindungsgemäße Außenwandung, insbesondere Frontabdeckung, eines Kraftfahrzeugs weist eine Sensoreinrichtung auf, die zum Einbau in die Außenwandung ausgebildet ist und die ausgestattet ist mit einem in einem Sensorgehäuse vorgesehenen Sensor, einer zur Fahrzeugaußenseite gerichteten, insbesondere frontseitigen, Sensorschutzabdeckung, die zumindest bereichsweise für vom Sensor erfassbare Signale durchlässig ist, zeichnet sich dadurch aus, dass die Außenwandung, insbesondere die Frontabdeckung, mit einer Öffnung oder Ausnehmung versehen ist, die zur Aufnahme der Sensoreinrichtung ausgebildet ist und dass die lichte Weite der Öffnung in Breitenrichtung (y-Richtung) und/oder in Höhenrichtung (z-Richtung) des Kraftfahrzeugs größer ist als die entsprechende Abmessung der Sensorschutzabdeckung, so dass zwischen dem Rand der Öffnung oder Ausnehmung und der Sensorschutzabdeckung im eingebauten Zustand ein (vorzugsweise umlaufender) Freiraum gebildet ist. Dieser Freiraum ermöglicht es dem Fahrtwind, an der in die Außenwandung, insbesondere in die Frontabdeckung, eingebauten Sensoreinrichtung zumindest bereichsweise (beispielsweise unten und seitlich) vorbei zu strömen und so Schmutzablagerungen, Wasser- oder Schneeablagerungen oder gar aufgetaute Eisstücke von der Sensorschutzabdeckung zu entfernen und abzutransportieren. Dabei ist es hilfreich, wenn die Sensorschutzabdeckung aus einem wasserabweisenden Material, zum Beispiel PTFE (Polytetrafluoräthylen), besteht oder mit einem solchen Material wasserabweisend beschichtet ist.

Die erfindungsgemäße Außenwandung zeichnet sich dadurch aus, dass die Sensorschutzabdeckung eine wannenförmige Gestalt mit einer vorderen Stirnwand und einer seitlich von dieser nach hinten hervorstehenden Seitenwandung aufweist. Eine solche wannen- oder becherförmige Gestaltung der vorderen Stirnwand schirmt den Zwischenraum zwischen dem Sensor und der Stirnwand der Sensorschutzabdeckung ab und bewirkt, dass die Sensorschutzabdeckung ein Eindringen von Schmutz, insbesondere von Schnee, in den Zwischenraum zwischen dem Sensor und der Sensorschutzabdeckung wirksam verhindert.

Vorteilhaft ist dabei, wenn die Seitenwandung der Sensorschutzabdeckung das Sensorgehäuse zumindest abschnittsweise seitlich überdeckt. Dadurch, dass die Sensorschutzabdeckung das Sensorgehäuse seitlich umgreift, wird der Zwischenraum noch wirksamer gegen Schmutz- und Schneeeintritt abgeschirmt.

Weitere bevorzugte und vorteilhafte Ausgestaltungsmerkmale der erfindungsgemäßen Außenwandung sind Gegenstand der Unteransprüche.

Besonders wirksam ist es, wenn der Freiraum unten an der Sensoreinrichtung gebildet ist. Schnee, Schneematsch, Eis, Wasser etc., die sich infolge der Schwerkraft am unteren Rand der Sensoreinrichtung sammeln, können durch den Freiraum unten an der Sensoreinrichtung besonders leicht mit dem Fahrtwind abtransportiert werden. Dies ist insbesondere dann der Fall, wenn die Sensorschutzabdeckung beheizt ist und Schnee bzw. Schneematsch bzw. Eis durch die Heizung zu Wasser geschmolzen werden, wobei sich das Wasser an der Unterseite der Sensorschutzabdeckung sammelt. Ohne den Freiraum würde das Wasser bei entsprechend tiefen Außentemperaturen an dieser Stelle gefrieren und die Sensorschutzabdeckung quasi "von unten nach oben "zusetzen".

In ähnlicher Weise ist es besonders wirkungsvoll, wenn der Freiraum seitlich an der Sensoreinrichtung gebildet ist, da sich auch hier Schnee, Schneematsch, Eis, Wasser etc. sammeln. Dies ist insbesondere im unteren Bereich der seitlichen Ränder der Sensoreinrichtung der Fall.

In Kombination ist es in besonderem Maße wirkungsvoll, wenn der Freiraum sowohl unten und seitlich (zumindest in dem seitlichen Bereich, der zur Unterseite der Sensoreinrichtung benachbart ist) gebildet ist.

Ein besonders umfassender Abtransport von Schnee, Schneematsch, Eis, Wasser etc. ist dann gegeben, wenn der Freiraum umlaufend an der Sensoreinrichtung gebildet ist.

Eine vorteilhafte Weiterbildung der Erfindung weist eine Sensoreinrichtung auf, die ausgebildet ist zum Einbau in eine Außenwandung, insbesondere in eine Frontabdeckung, eines Kraftfahrzeugs und die ausgestattet ist mit einem in einem Sensorgehäuse vorgesehenen Sensor, einer zur Fahrzeugaußenseite gerichteten, insbesondere frontseitigen, Sensorschutzabdeckung, die zumindest bereichsweise für vom Sensor erfassbare Signale durchlässig ist, und mit Befestigungsmitteln zur Anbringung des Sensorgehäuses am Kraftfahrzeug, wobei vorgesehen ist, dass das Sensorgehäuse mit dem Sensor und die Sensorschutzabdeckung eine bauliche Einheit bilden, wozu die Sensorschutzabdeckung am Sensorgehäuse angebracht oder anbringbar ist.

Die Sensoreinrichtung ist somit als kompakte Sensoreinheit ausgebildet, die als vollständig vormontiertes Bauteil am Kraftfahrzeug verbaubar ist und die aufgrund ihres kompakten Aufbaus und der nahe am Sensor angebrachten Sensorschutzabdeckung im eingebauten Zustand eine Verringerung der verblockten Fläche mit sich bringt. Durch die integrale Ausgestaltung ergibt sich ein definierter und stabiler Abstand zwischen dem Sensor und der Sensorschutzabdeckung, wodurch der Einfluss der Lage der Schutzabdeckung auf die Leistung des Sensors gegenüber dem Stand der Technik deutlich reduziert ist.

Besonders vorteilhaft ist es, wenn die Sensorschutzabdeckung, insbesondere deren Stirnwand und vorzugsweise auch die Seitenwandung, zumindest bereichsweise beheizbar ausgebildet ist. Durch diese Beheizbarkeit der Sensorschutzabdeckung wird wirksam verhindert, dass sich im Winter Schnee und Eis auf der Sensorschutzabdeckung festsetzen können. Eine Beheizung nicht nur der Stirnwand, sondern auch der Seitenwandung sorgt dafür, dass sich auch an den seitlichen Rändern kein Eis oder gefrorener Schnee festsetzen kann, so dass bei entsprechendem Einbau der Sensoreinrichtung in die Außenwandung des Kraftfahrzeugs eine seitliche Umströmung der Sensorschutzabdeckung, beispielsweise zum Abtransport von Schmutz oder Schnee, gewährleistet ist.

Besonders vorteilhaft ist es, wenn die untere Seitenwandung und/oder die seitlichen Seitenwandungen der Sensorschutzabdeckung beheizbar ausgebildet sind. Wie bereits oben ausgeführt, sammeln sich infolge der Schwerkraft Schnee, Schneematsch, Eis, Wasser etc., insbesondere das durch eine Heizeinrichtung geschmolzene Wasser, am unteren Rand sowie an den seitlichen Rändern der Sensorschutzabdeckung. Durch die Beheizung der unteren Seitenwandung und/oder der seitlichen Seitenwandungen der Sensorschutzabdeckung wird gewährleistet, dass Schnee und/oder Schneematsch und/oder Eis geschmolzen und durch den Freiraum abtransportiert werden können. Außerdem wird verhindert, dass Wasser, insbesondere geschmolzener Schnee und/oder geschmolzener Schneematsch und/oder geschmolzenes Eis infolge der Beheizung der Frontseite der Sensorschutzabdeckung, bei Außentemperaturen unter dem Gefrierpunkt (wieder) gefrieren.

Durch die Beheizung der Seitenwandung der Sensorschutzabdeckung wird der Abtransport von Wasser und geschmolzenem Schnee oder Schneematsch durch den Fahrtwind gewährleistet, indem ein Zusetzen des Freiraums an der Unterseite und/oder an den Seiten der Sensorschutzabdeckung verhindert wird.

Selbstverständlich kann auch der gesamte Umfang der Seitenwandung der Sensorschutzabdeckung beheizbar ausgebildet sein, wodurch gewährleistet wird, dass im gesamten umlaufenden Freiraum sich sammelndes Wasser bzw. Schmelzwasser nicht gefrieren kann.

Eine andere vorteilhafte Ausführungsform der erfindungsgemäßen Sensoreinrichtung zeichnet sich dadurch aus, dass die Sensorschutzabdeckung an ihrer zum Sensorgehäuse weisenden Rückseite mit mehreren Schnapp-Rast-Befestigungsmitteln versehen ist, die ausgebildet sind, um in zugeordnete Befestigungsöffnungen des Sensorgehäuses einzugreifen und dort zu verrasten. Diese Ausführungsform vereinfacht und beschleunigt die Montage der Sensorschutzabdeckung am Sensorgehäuse.

Dabei ist es besonders von Vorteil, wenn die Schnapp-Rast-Befestigungsmittel jeweils eine Mehrzahl von Rastfederelementen aufweisen, die um eine sich zur Rückseite öffnende Montageöffnung ringförmig angeordnet sind. Bei dieser Ausführungsform kann die Montageöffnung gleichzeitig zur Befestigung der Sensoreinrichtung am Kraftfahrzeug genutzt werden.

Eine vorteilhafte Ausführungsform einer derartigen Befestigungsmöglichkeit ist dadurch gekennzeichnet, dass die jeweilige Montageöffnung ausgebildet ist, um einen Montagebolzen aufzunehmen, mittels dem die Sensoreinrichtung an einem Abschnitt der Außenwandung, insbesondere der Frontabdeckung, des Kraftfahrzeugs anbringbar ist. Ein solcher Bolzen kann beispielsweise eine Schraube sein, die in ein in der Montageöffnung vorgesehenes Gewinde einschraubbar ist.

Vorteilhaft ist aber auch, wenn der Montagebolzen in der Montageöffnung mit zwei Freiheitsgraden schwenkbar gelagert ist. Eine solche Kugellagerung ermöglicht es, den Montagebolzen bei der Montage auszurichten, um eventuell erforderliche Montagetoleranzen auszugleichen.

Schließlich ist die Erfindung auch noch gerichtet auf ein Kraftfahrzeug mit einer eine erfindungsgemäße Sensoreinrichtung aufweisenden Außenwandung, insbesondere Frontabdeckung, weiter insbesondere mit einer vorgenannten erfindungsgemäßen Außenwandung.

Bevorzugte Ausführungsbeispiele der Erfindung mit zusätzlichen Ausgestaltungsdetails und weiteren Vorteilen sind nachfolgend unter Bezugnahme auf die beigefügte Zeichnung näher beschrieben und erläutert.

### KURZE BESCHREIBUNG DER ZEICHNUNGEN

Es zeigt:
- Fig. 1: eine perspektivische Ansicht eines Ausschnitts einer Frontabdeckung eines Kraftfahrzeugs;
- Fig. 2: eine Frontansicht einer erfindungsgemäßen Sensoreinrichtung;
- Fig. 3: eine perspektivische Rückansicht der Sensoreinrichtung aus Fig. 2;
- Fig. 4: einen Horizontalschnitt durch den in Fahrtrichtung linken Teil der Sensoreinrichtung in Richtung des Pfeils IV in Fig. 3.

### DARSTELLUNG VON BEVORZUGTEN AUSFÜHRUNGSBEISPIELEN

Nachstehend wird die Erfindung am Beispiel einer in der Fahrzeugfront vorgesehenen Sensoreinrichtung beschrieben. Selbstverständlich können die mit der Erfindung erzielbaren Vorteile auch dann erreicht werden, wenn die Sensoreinrichtung zum Beispiel in einer Fahrzeugseitenwand oder im Fahrzeugheck vorgesehen ist. Daher ist die vorliegende Erfindung nicht auf eine Fahrzeugfront beschränkt, sondern allgemein auf Sensoreinrichtungen anwendbar, die in einer Außenwandung eines Fahrzeugs vorgesehen sind, wobei der Begriff "Außenwandung" nicht auf die eigentliche Fahrzeugkarosserie beschränkt ist, sondern auch jegliche Verkleidungs-, Aufbau- oder Anbauteile mit umfasst.

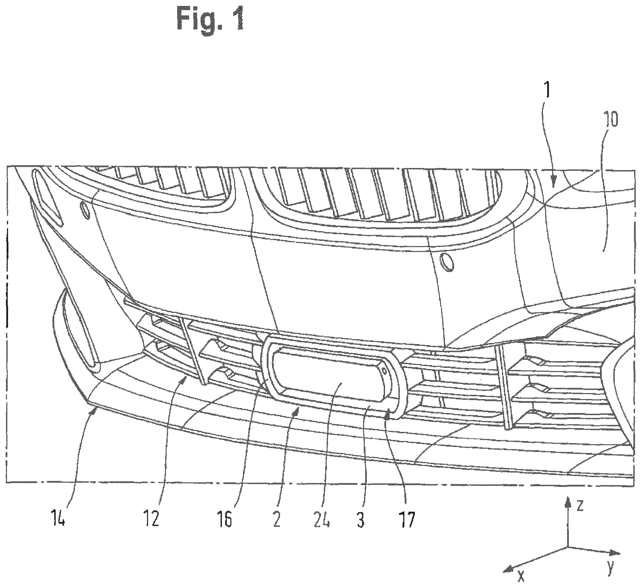

Fig. 1 zeigt eine perspektivische Frontansicht einer Frontabdeckung 10 eines Fahrzeugs 1 mit einer erfindungsgemäßen Sensoreinrichtung 2. Die Frontabdeckung 10 ist in ihrem unteren Abschnitt mit einer unteren Kühlergrillabdeckung 12 versehen, durch die Kühlluft in einen Bereich hinter der Frontabdeckung 10 strömen kann. Unterhalb der Kühlergrillabdeckung 12 ist eine sich in Fahrtrichtung nach vorne erstreckende Spoilerkontur 14 vorgesehen.

In einen Einbauraum 17 hinter der Kühlergrillabdeckung 12 ist die nachstehend im Detail beschriebene erfindungsgemäße Sensoreinrichtung 2, umgeben von einem Rahmen 16, eingesetzt. Der Rahmen 16 kann ein separates Bauteil sein, das mit der Kühlergrillabdeckung 12 verbindbar ist oder kann ein integraler Bestandteil der Kühlergrillabdeckung 12 sein.

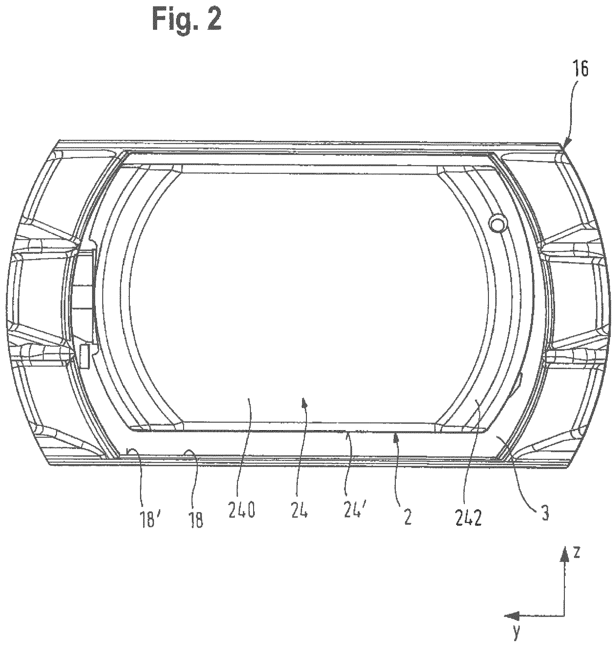

Der Aufbau der erfindungsgemäßen Sensoreinrichtung 2 wird nachstehend unter Bezugnahme auf die Fig. 2 bis 4 näher erläutert.

In der Frontansicht der Fig. 2 ist der Rahmen 16 gezeigt, der mit der Kühlergrillabdeckung 12 oder mit einem anderen Bestandteil der Frontabdeckung 10 des Fahrzeugs (je nach Einbauort) verbindbar ist oder integraler Bestandteil davon ist. Dieser Rahmen 16 umgibt eine Öffnung 18, die einen Zugang zu einem Einbauraum 17 für die Sensoreinrichtung 2 freigibt.

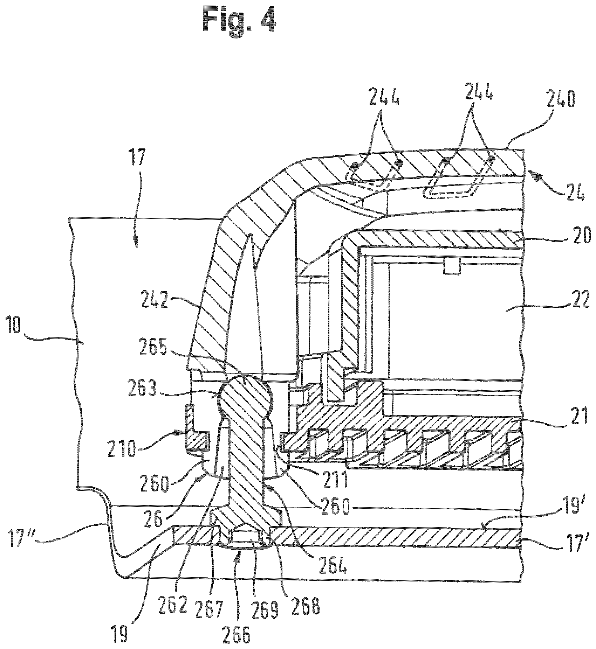

Die Sensoreinrichtung 2 weist ein Sensorgehäuse 20 auf, welches einen Sensor 22, beispielsweise einen Radarsensor, aufnimmt (Fig. 4). An der in Fahrtrichtung gesehen nach hinten weisenden Rückseite weist das Gehäuse 20 einen als Kühlkörper ausgebildeten und mit Kühlrippen versehenen Deckel 21 auf. In Fahrtrichtung nach vorne ist das Sensorgehäuse 20 von einer frontseitigen Schutzabdeckung 24 abgedeckt.

Wie in Fig. 2 gut zu erkennen ist, ist die lichte Weite der Öffnung 18 in Richtung der Fahrzeugbreite (y-Richtung) über nahezu die gesamte Höhe der Sensoreinrichtung 2 größer als die entsprechende Breite der in Fig. 2 sichtbaren vorderen Sensorschutzabdeckung 24 der Sensoreinrichtung 2. Auch in Höhenrichtung des Fahrzeugs (z-Richtung) ist die lichte Weite der Öffnung 18 größer als die Erstreckung der Sensorschutzabdeckung 24 in z-Richtung. Es ergibt sich so in der in Fig. 2 gezeigten Frontalansicht zwischen dem Rand 18' der Öffnung 18 und dem in der Projektion der Fig. 2 sichtbaren Außenumfang 24' der Sensorschutzabdeckung 24 ein umlaufender Freiraum 3. Dieser umlaufende Freiraum 3 ist unterhalb der Sensoreinrichtung 2 und im unteren seitlichen Bereich größer als oberhalb der Sensoreinrichtung 2 und im oberen seitlichen Bereich.

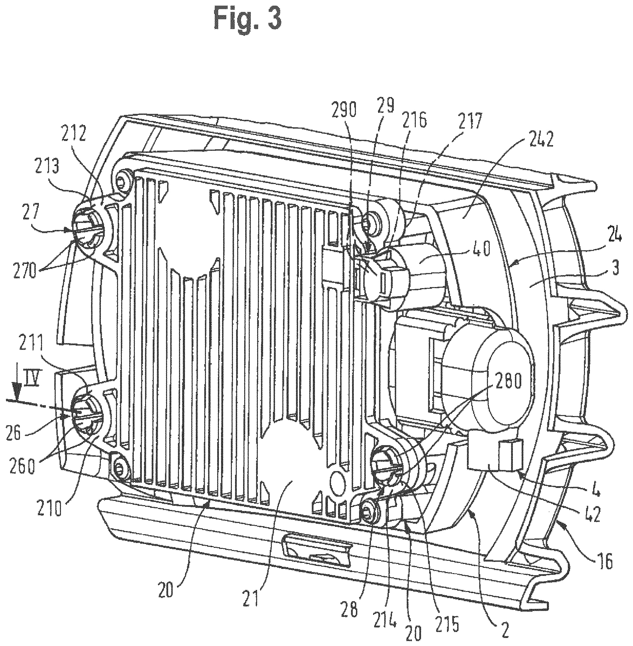

Zwar kann man aufgrund der Projektion in Fig. 2 den Eindruck gewinnen, dass im oberen Bereich der Sensoreinrichtung 2 kein oder nur ein geringer seitlicher Freiraum 3 zur Innenwand 18' der Öffnung 18 gegeben ist, doch ist die Sensoreinrichtung 2, wie in Fig. 3 zu sehen ist, hinter dem Sensoröffnungsrahmen 16 gelegen, so dass der Freiraum 3 einen umlaufenden Luftspalt zwischen der Sensorschutzabdeckung 24 und dem Sensoröffnungsrahmen 16 bildet, durch den Fahrtwind an der Sensorschutzabdeckung 24 vorbeiströmen kann. Je nach Einbaulage der Sensoreinrichtung in der Außenwandung des Fahrzeugs kann der Freiraum 3 - wie im gezeigten Beispiel - von vorne durchströmt werden oder der Fahrtwind kann - beispielsweise bei einem Heckeinbau der Sensoreinrichtung - den Freiraum 3 in entgegengesetzter Richtung durchströmen. Luftleiteinrichtungen am Sensoröffnungsrahmen 16 können in diesem Fall den Fahrtwind zumindest abschnittsweise entlang der Sensorschutzabdeckung 24 leiten.

Die Sensorschutzabdeckung 24 weist, wie in Fig. 4 gezeigt ist, eine vordere Stirnwand 240 und eine umlaufende Seitenwandung 242 auf, die sich von der vorderen Stirnwand 240 nach hinten erstreckt, wie besonders gut in den Fig. 3 und 4 zu sehen ist. Die vordere Stirnwand 240 ist mit einer Heizung 244 versehen, mit der die vordere Stirnwand 240 beheizbar ist. Auch die Seitenwandung 242 kann eine (nicht gezeigte) Heizeinrichtung aufweisen, mit der die Seitenwand 242 zumindest abschnittsweise beheizbar ist. Diese Heizung der Seitenwandung 242 kann mit der Heizung 244 der Stirnwand 240 elektrisch gekoppelt sein.

Das mit dem Sensor 22 versehene Sensorgehäuse 20 mit seiner Rückwand 21 und die Sensorschutzabdeckung 24 bilden eine bauliche Einheit. Dazu ist die Rückwand 21 des Sensorgehäuses 20 mit vier seitlichen Montagelaschen 210, 212, 214 und 216 (in den Figuren nicht gezeigt) versehen. In jeder dieser Montagelaschen 210, 212, 214, 216 ist eine Befestigungsöffnung 211, 213, 215, 217 vorgesehen, in die ein nachstehend beschriebenes Schnapp-Rast-Befestigungsmittel 26, 27, 28, 29 der Sensorschutzabdeckung 24 einsetzbar ist.

Diese Schnapp-Rast-Befestigungsmittel 26, 27, 28, 29 sind an der entgegen der Fahrtrichtung nach hinten (zum Sensorgehäuse 20 hin) weisenden Rückseite der Sensorschutzabdeckung 24 vorgesehen. Wie in den Fig. 3 und 4 zu erkennen ist, erstrecken sich die jeweiligen Schnapp-Rast-Befestigungsmittel 26, 27, 28, 29 von der Seitenwandung 242 der Sensorschutzabdeckung 24 in Fahrtrichtung nach hinten.

Auch wenn im Beispiel der Fig. 4 nur das Schnapp-Rast-Befestigungsmittel 26 gezeigt ist und im Zusammenhang mit dieser Figur beschrieben wird, gelten die nachstehenden Ausführungen selbstverständlich auch für die anderen Schnapp-Rast-Befestigungsmittel 27, 28 und 29. Jedes der Schnapp-Rast-Befestigungsmittel 26, 27, 28, 29 ist mit einer Mehrzahl von Rastfederelementen 260, 270, 280, 290 an seinem nach hinten weisenden freien Ende ausgestattet. Diese Rastfederelemente 260, 270, 280, 290 ermöglichen es, dass das freie Ende des jeweiligen Schnapp-Rast-Befestigungsmittels 26, 27, 28, 29 in die jeweils zugeordnete Befestigungsöffnung 211, 213, 215, 217 an der Rückwand 21 des Sensorgehäuses 20 einführbar ist und nach vollständigem Einführen hinter der Befestigungsöffnung 211, 213, 215, 217 verrastet. Auf diese Weise wird die Sensorschutzabdeckung 24 ohne Werkzeug fest aber dennoch lösbar mit dem Sensorgehäuse 20 verbunden.

Das jeweilige Schnapp-Rast-Befestigungsmittel 26, 27, 28, 29 weist, umgeben von den zugeordneten Rastfederelementen 260, 270, 280, 290, eine sich zur Rückseite öffnende Montageöffnung 262, 272, 282, 292 auf, wobei die Rastfederelemente 260, 270, 280, 290 ringförmig um die jeweilige Montageöffnung 262, 272, 282, 292 angeordnet sind.

In die jeweilige Montageöffnung ist, wie lediglich in Verbindung mit Fig. 4 stellvertretend anhand der Montageöffnung 262 gezeigt und beschrieben ist, ein Montagebolzen 264 eingesetzt, der an seinem in die Montageöffnung 262 eingreifenden Ende mit einem Kugelkopf 265 versehen ist, der in eine im Inneren der Montageöffnung 262 ausgebildete Kugelpfanne 263 eingreift und dort gelenkig und mit zwei Freiheitsgraden bewegbar gelagert ist. Auf diese Weise kann der Montagebolzen 264 nach oben und nach unten sowie nach links und nach rechts sowie in dazwischen gelegene Winkelstellungen verschwenkt werden.

An seinem in Fahrtrichtung nach hinten weisenden rückwärtigen Ende ist der Montagebolzen 264 mit einem Montageabschnitt 266 versehen, der einen zylindrischen Passkörper 268 und einen in Fahrtrichtung davor gelegenen Ringflansch 267 aufweist. Mittels dieses Montageabschnitts 266 ist der jeweilige Montagebolzen 264 an einem vertikalen Abschnitt 19 der Frontabdeckung 10 des Kraftfahrzeugs 1 anbringbar, wie in Fig. 4 gezeigt ist. Dieser vertikale Abschnitt 19 ist im gezeigten Beispiel von der Rückwand 17' des Einbauraums 17 gebildet. Dazu ist der zylindrische Passkörper 268 in eine Bohrung im vertikalen Abschnitt 19 der Frontabdeckung 10 so weit eingeführt, dass der Ringflansch 267 zur Anlage an die vordere Fläche 19' des vertikalen Abschnitts 19 gelangt. Eine (in Fig. 4 nicht gezeigte) Bundschraube wird dann von hinten in ein am Ende des Montagebolzens 264 vorgesehenes Gewindeloch 269 eingeschraubt und fixiert so den Montagebolzen 264 am vertikalen Abschnitt 19 der Frontabdeckung 10 des Kraftfahrzeugs 1.

In Fig. 3 ist ein an der Sensoreinrichtung 2 vorgesehener elektrischer Anschluss 4 gezeigt. Dieser elektrische Anschluss 4 versorgt die Sensoreinrichtung 2 mit elektrischer Energie und umfasst ebenso Datenkommunikationsleitungen zur Signalübertragung zwischen dem Sensor 22 der Sensoreinrichtung 2 und einem (nicht gezeigten) Steuergerät. Im Bereich der in Fahrtrichtung gesehen oberen rechten Montagelasche 216 ist an der Rückwand 21 eine (in Fig. 3 durch eine Schutzkappe 40 abgedeckte) elektrische Steckverbindung vorgesehen, die mit einer im Bereich des zugeordneten Schnapp-Rast-Befestigungsmittels 29 ausgebildeten elektrischen Gegensteckverbindung zusammenwirkt und über die die Heizung 244 der Sensorschutzabdeckung 24 mit elektrischer Energie versorgt wird. Diese Paarung aus Steckverbindung und Gegensteckverbindung ist so ausgebildet, dass beim Zusammenstecken der Sensorschutzabdeckung 24 mit der Rückwand 21 des Sensorgehäuses 20 eine elektrisch leitende Verbindung zur Versorgung der Heizung 244 hergestellt wird.

Die erfindungsgemäße Sensoreinrichtung 2 ist auf diese Weise nicht nur kompakt aufgebaut und schnell zusammensteckbar, sondern es ist zur elektrischen Versorgung des Sensors 22 und der Heizung 244 sowie zur Herstellung der elektrischen Datenkommunikationsverbindung nur eine einzige elektrische Steckverbindung erforderlich, die am elektrischen Anschluss 4 einen elektrischen Stecker 42 aufweist, der mit einem (nicht gezeigten) Gegenstecker eines Anschlusskabels zusammensteckbar ist. Dadurch werden sowohl der Aufwand für die Verkabelung im Kraftfahrzeug 1 als auch der Einbauaufwand zur Anbringung der Sensoreinrichtung 2 reduziert.

Die im Einbauraum 17 eingebaute kompakte erfindungsgemäße Sensoreinrichtung 2 kann vom Fahrtwind umströmt werden, wozu der Einbauraum 17 im hinteren seitlichen Bereich mit Austrittsöffnungen 17" versehen ist, durch welche die mit dem Fahrtwind einströmende Luft wieder entweichen kann. Durch diese Austrittsöffnungen 17" werden auch Wasser, Schnee und Schmutzpartikel abgeführt, die der Fahrtwind von der Oberfläche der Sensorschutzabdeckung 24 mitnimmt.

Die Erfindung ist nicht auf das obige Ausführungsbeispiel beschränkt, das lediglich der allgemeinen Erläuterung des Kerngedankens der Erfindung dient. Im Rahmen des Schutzumfangs kann die erfindungsgemäße Vorrichtung vielmehr auch andere als die oben beschriebenen Ausgestaltungsformen annehmen. Die Vorrichtung kann hierbei insbesondere Merkmale aufweisen, die eine Kombination aus den jeweiligen Einzelmerkmalen der Ansprüche darstellen.

Bezugszeichen in den Ansprüchen, der Beschreibung und den Zeichnungen dienen lediglich dem besseren Verständnis der Erfindung und sollen den Schutzumfang nicht einschränken.

## Patentansprüche

1. Außenwandung, insbesondere Frontabdeckung (10), eines Kraftfahrzeugs (1), mit einer Sensoreinrichtung (2) ausgebildet zum Einbau in die Außenwandung, insbesondere in die Frontabdeckung (10), des Kraftfahrzeugs (1), insbesondere Radarsensoreinrichtung, mit einem in einem Sensorgehäuse (20) vorgesehenen Sensor (22), einer zur Fahrzeugaußenseite gerichteten Sensorschutzabdeckung (24), die zumindest bereichsweise für vom Sensor (22) erfassbare Signale durchlässig ist, wobei die Außenwandung, insbesondere die Frontabdeckung (10), mit einer Öffnung (18) oder Ausnehmung versehen ist, die zur Aufnahme der Sensoreinrichtung (2) ausgebildet ist und die lichte Weite der Öffnung (18) in Breitenrichtung und/oder in Höhenrichtung des Kraftfahrzeugs (1) größer ist als die entsprechende Abmessung der Sensorschutzabdeckung (24), so dass zwischen dem Rand der Öffnung (18) oder Ausnehmung und der Sensorschutzabdeckung (24) im eingebauten Zustand ein Freiraum (3) gebildet ist, der es dem Fahrtwind ermöglicht, an der in die Außenwandung, insbesondere in die Frontabdeckung (10), eingebauten Sensoreinrichtung (2) zumindest bereichsweise vorbei zu strömen, wobei die Sensorschutzabdeckung (24) eine wannenförmige Gestalt mit einer vorderen Stirnwand (240) und einer seitlich von dieser nach hinten hervorstehenden Seitenwandung (242) aufweist.

2. Außenwandung nach Anspruch 1, **dadurch gekennzeichnet, dass** der Freiraum (3) unten an der Sensoreinrichtung (2) gebildet ist. 11

3. Außenwandung nach Anspruch 1 oder 2, **dadurch gekennzeichnet, dass** der Freiraum (3) seitlich an der Sensoreinrichtung (2) gebildet ist.

4. Außenwandung nach Anspruch 1,
**dadurch gekennzeichnet,**
**dass** der Freiraum (3) umlaufend an der Sensoreinrichtung (2) gebildet ist.

5. Außenwandung nach einem der vorhergehenden Ansprüche,
**gekennzeichnet durch,**
Befestigungsmittel (26, 27, 28, 29) zur Anbringung des Sensorgehäuses (20) am Kraftfahrzeug (1), wobei das Sensorgehäuse (20) mit dem Sensor (22) und die Sensorschutzabdeckung (24) eine bauliche Einheit bilden, wozu die Sensorschutzabdeckung (24) am Sensorgehäuse (20) angebracht oder anbringbar ist.

6. Außenwandung nach einem der vorhergehenden Ansprüche,
**dadurch gekennzeichnet,**
**dass** die Sensorschutzabdeckung (24) eine wannenförmige Gestalt mit einer vorderen Stirnwand (240) und einer seitlich von dieser nach hinten hervorstehenden Seitenwandung (242) aufweist.

7. Außenwandung nach Anspruch 6,
**dadurch gekennzeichnet,**
**dass** die Seitenwandung (242) der Sensorschutzabdeckung (24) das Sensorgehäuse (20) zumindest abschnittsweise seitlich überdeckt.

8. Außenwandung nach einem der vorhergehenden Ansprüche,
**dadurch gekennzeichnet,**
**dass** die Stirnwand (240) und/oder die Seitenwandung (242) der Sensorschutzabdeckung (24) zumindest bereichsweise beheizbar ausgebildet ist bzw. sind.

9. Außenwandung nach Anspruch 8,
**dadurch gekennzeichnet,**
**dass** die untere Seitenwandung (242) und/oder die seitlichen Seitenwandungen (242) beheizbar ausgebildet sind.

10. Außenwandung nach einem der vorhergehenden Ansprüche,
**dadurch gekennzeichnet,**
**dass** die Sensorschutzabdeckung (24) an ihrer zum Sensorgehäuse (20) weisenden Rückseite mit mehreren Schnapp-Rast-Befestigungsmitteln (26, 27, 28, 29) zur Anbringung des Sensorgehäuses (20) am Kraftfahrzeug (1), versehen ist, die ausgebildet sind, um in zugeordnete Befestigungsöffnungen (211, 213, 215, 217) des Sensorgehäuses (20) einzugreifen und zu verrasten.

11. Außenwandung nach Anspruch 10,
**dadurch gekennzeichnet,**
**dass** die Schnapp-Rast-Befestigungsmittel (26, 27, 28, 29) jeweils eine Mehrzahl von Rastfederelementen (260, 270, 280, 290) aufweisen, die um eine sich zur Rückseite öffnende Montageöffnung (262, 272, 282, 292) ringförmig angeordnet sind.

12. Außenwandung nach Anspruch 11,
**dadurch gekennzeichnet,**
**dass** die jeweilige Montageöffnung (262) ausgebildet ist, um einen Montagebolzen (264) aufzunehmen, mittels dem die Sensoreinrichtung (2) an einem Abschnitt (19) der Außenwandung, insbesondere der Frontabdeckung (10), des Kraftfahrzeugs (1) anbringbar ist.

13. Außenwandung nach Anspruch 12,
**dadurch gekennzeichnet,**
**dass** der Montagebolzen (264) in der Montageöffnung (262) mit zwei Freiheitsgraden schwenkbar gelagert ist.

14. Kraftfahrzeug mit einer Außenwandung nach einem der Ansprüche 1 bis 13.

## Claims

1. Outer wall, in particular front covering (10), of a motor vehicle (1), having a sensor device (2) designed for installing in the outer wall, in particular in the front covering (10), of the motor vehicle (1), in particular radar sensor device, having a sensor (22) which is provided in a sensor housing (20), having a sensor protective covering (24) which is directed towards the outer side of the vehicle and is permeable at least in regions to signals which can be detected by the sensor (22), wherein the outer wall, in particular the front covering (10), is provided with an opening (18) or recess which is designed for receiving the sensor device (2), and the clear width of the opening (18) in the width direction and/or in the vertical direction of the motor vehicle (1) is greater than the corresponding size of the sensor protective cover (24) such that a clearance (3) is formed between the edge of the opening (18) or recess and the sensor protective covering (24) in the installed state, the clearance making it possible for the head wind to flow at least in regions past the sensor device (2) installed in the outer wall, in particular in the front covering (10), wherein the sensor protective covering (24) has a trough-shaped configuration with a front end wall (240) and a side wall (242) projecting rearwards laterally from the latter.

2. Outer wall according to Claim 1, **characterized in that** the clearance (3) is formed at the bottom of the sensor device (2).

3. Outer wall according to Claim 1 or 2, **characterized in that** the clearance (3) is formed laterally on the sensor device (2).

4. Outer wall according to Claim 1,
**characterized**
**in that** the clearance (3) is formed encircling the sensor device (2).

5. Outer wall according to one of the preceding claims,
**characterized by**
fastening means (26, 27, 28, 29) for attaching the sensor housing (20) to the motor vehicle (1), wherein the sensor housing (20), together with the sensor (22), and the sensor protective covering (24) form a structural unit, for which purpose the sensor protective covering (24) is attached or can be attached to the sensor housing (20).

6. Outer wall according to one of the preceding claims,
**characterized**
**in that** the sensor protective covering (24) has a trough-shaped configuration with a front end wall (240) and a side wall (242) projecting rearwards laterally from the latter.

7. Outer wall according to Claim 6,
**characterized**
**in that** the side wall (242) of the sensor protective covering (24) laterally overlaps the sensor housing (20) at least in sections.

8. Outer wall according to one of the preceding claims,
**characterized**
**in that** the end wall (240) and/or the side wall (242) of the sensor protective covering (24) is/are heatable at least in regions.

9. Outer wall according to Claim 8,
**characterized**
**in that** the lower side wall (242) and/or the lateral side walls (242) is/are heatable.

10. Outer wall according to one of the preceding claims,
**characterized**
**in that** the sensor protective covering (24) is provided on its rear side facing the sensor housing (20) with a plurality of snap-action latching fastening means (26, 27, 28, 29) for attaching the sensor housing (20) to the motor vehicle (1), said snap-action latching fastening means being designed to engage and to latch in associated fastening openings (211, 213, 215, 217) of the sensor housing (20) .

11. Outer wall according to Claim 10,
**characterized**
**in that** the snap-action latching fastening means (26, 27, 28, 29) each have a plurality of latching spring elements (260, 270, 280, 290) which are arranged annularly around a mounting opening (262, 272, 282, 292) opening to the rear side.

12. Outer wall according to Claim 11,
**characterized**
**in that** the respective mounting opening (262) is designed to receive a mounting bolt (264) by means of which the sensor device (2) is attachable to a portion (19) of the outer wall, in particular of the front covering (10), of the motor vehicle (1).

13. Outer wall according to Claim 12,
**characterized**
**in that** the mounting bolt (264) is mounted pivotably with two degrees of freedom in the mounting opening (262) .

14. Motor vehicle having an outer wall according to one of Claims 1 to 13.

## Revendications

1. Paroi extérieure, en particulier capot avant (10), d'un véhicule automobile (1), comprenant un dispositif de détection (2) qui est réalisé pour être installé dans la paroi extérieure, en particulier dans le capot avant (10), du véhicule automobile (1), en particulier un dispositif de détection radar, comprenant un capteur (22) prévu dans un boîtier de capteur (20), un capot de protection de capteur (24) orienté vers la face extérieure du véhicule et qui est au moins par endroits transparent à des signaux pouvant être détectés par le capteur (22),
dans laquelle la paroi extérieure, en particulier le capot avant (10), est munie d'une ouverture (18) ou d'un évidement qui est réalisé(e) pour recevoir le dispositif de détection (2), et la largeur libre de l'ouverture (18) dans le sens de la largeur et/ou dans le sens de la hauteur du véhicule automobile (1) est supérieure à la dimension correspondante du capot de protection de capteur (24) de sorte qu'entre le bord de l'ouverture (18) ou de l'évidement et le capot de protection de capteur (24), à l'état installé, se forme un espace libre (3) qui permet au vent de déplacement de passer au moins par endroits devant le dispositif de détection (2) installé dans la paroi extérieure, en particulier dans le capot avant (10), le capot de protection de capteur (24) présentant une configuration en forme de cuvette pourvue d'une paroi frontale avant (240) et d'une paroi latérale (242) faisant saillie latéralement à partir de celle-ci vers l'arrière.

2. Paroi extérieure selon la revendication 1, **caractérisée en ce que** l'espace libre (3) se forme en bas au niveau du dispositif de détection (2).

3. Paroi extérieure selon la revendication 1 ou 2, **caractérisée en ce que** l'espace libre (3) se forme latéralement au niveau du dispositif de détection (2).

4. Paroi extérieure selon la revendication 1, **caractérisée en ce que** l'espace libre (3) se forme de manière périphérique au niveau du dispositif de détection (2).

5. Paroi extérieure selon l'une quelconque des revendications précédentes, **caractérisée par** des moyens de fixation (26, 27, 28, 29) pour fixer le boîtier de capteur (20) au véhicule automobile (1), dans laquelle le boîtier de capteur (20) forme avec le capteur (22) et le capot de protection de capteur (24) une unité structurelle, le capot de protection de capteur (24) étant fixé ou pouvant être fixé au boîtier de capteur (20) à cet effet.

6. Paroi extérieure selon l'une quelconque des revendications précédentes, **caractérisée en ce que** le capot de protection de capteur (24) présente une configuration en forme de cuvette pourvue d'une paroi frontale avant (240) et d'une paroi latérale (242) faisant saille latéralement à partir de celle-ci vers l'arrière.

7. Paroi extérieure selon la revendication 6, **caractérisée en ce que** la paroi latérale (242) du capot de protection de capteur (24) recouvre le boîtier de capteur (20) latéralement au moins par endroits.

8. Paroi extérieure selon l'une quelconque des revendications précédentes, **caractérisée en ce que** la paroi frontale (240) et/ou la paroi latérale (242) du capot de protection de capteur (24) sont réalisées au moins par endroits de manière à pouvoir être chauffées.

9. Paroi extérieure selon la revendication 8, **caractérisée en ce que** la paroi latérale inférieure (242) et/ou les parois latérales (242) sur le côté sont réalisées de manière à pouvoir être chauffées.

10. Paroi extérieure selon l'une quelconque des revendications précédentes, **caractérisée en ce que** le capot de protection de capteur (24) est muni sur sa face arrière orientée vers le boîtier de capteur (20) de plusieurs moyens de fixation à encliquetage (26, 27, 28, 29) pour fixer le boîtier de capteur (20) au véhicule automobile (1) et qui sont réalisés pour venir en prise et s'enclencher dans des ouvertures de fixation associées (211, 213, 215, 217) du boîtier de capteur (20).

11. Paroi extérieure selon la revendication 10, **caractérisée en ce que** les moyens de fixation à encliquetage (26, 27, 28, 29) présentent respectivement une pluralité d'éléments de ressort d'encliquetage (260, 270, 280, 290) qui sont disposés en anneau autour d'une ouverture de montage (262, 272, 282, 292) s'ouvrant vers la face arrière.

12. Paroi extérieure selon la revendication 11, **caractérisée en ce que** l'ouverture de montage (262) respective est réalisée pour recevoir un boulon de montage (264) qui permet de fixer le dispositif de détection (2) à une partie (19) de la paroi extérieure, en particulier du capot avant (10), du véhicule automobile (1).

13. Paroi extérieure selon la revendication 12, **caractérisée en ce que** le boulon de montage (264) est monté pivotant avec deux degrés de liberté dans l'ouverture de montage (262).

14. Véhicule automobile comprenant une paroi extérieure selon l'une quelconque des revendications 1 à 13.
